# FASCICULE DE BREVET EUROPEEN

(11) **EP 1 207 317 B1**
(45) Date de publication et mention de la délivrance du brevet: **10.12.2008**
(21) Numéro de dépôt: 01402853.4
(22) Date de dépôt: 06.11.2001
(51) Int. Cl.: F16D 69/04, F16D 13/64

(54) **Dispositif de fixation par collage de garnitures de friction et procédé de fixation**
Vorrichtung zum Aufkleben von Reibbelägen und Klebeverfahren
Device for bonding of friction linings and bonding method

(30) Priorité: 20.11.2000 FR 0014929
(43) Date de publication de la demande: 22.05.2002
(73) Titulaire: Valeo Matériaux de Friction, 87020 Limoges cedex 9 (FR)
(72) Inventeur: Marchisseau, Michel, 87100 Limoges (FR); Causse, Gilles, 87000 Limoges (FR)
(74) Mandataire: Lemaire, Marc

(56) Documents cités:
- EP-A- 0 365 159
- EP-A- 0 781 937
- EP-A- 0 797 017
- EP-A- 0 806 586
- US-A- 5 196 081

## Description

L'invention propose un dispositif de fixation par collage de garnitures de friction.

L'invention propose plus particulièrement un dispositif de fixation par collage de garnitures de friction sur une face latérale de fixation d'une pale radiale s'étendant sur la périphérie extérieure d'un voile annulaire de support.

L'invention propose aussi un procédé de fixation par collage des garnitures de friction.

### Etat de la technique

Les garnitures de friction sont couramment utilisées pour la fabrication de disques de friction, notamment d'un embrayage à sec pour les véhicules automobiles.

Un disque de friction comporte généralement un voile de support en forme de rondelle annulaire dont la portion périphérique extérieure est fractionnée en des pales radiales qui présentent, à la faveur de plis, une partie centrale de fixation qui est raccordée à la portion centrale du voile par un pli tangentiel qui forme le pied de la pale.

Le pli tangentiel permet un décalage axial de la partie centrale de fixation par rapport au plan général de la portion centrale du voile. Des garnitures de frottement sont fixées de part et d'autre de la portion périphérique extérieure.

La fixation des garnitures sur les pales radiales peut être obtenue par exemple par rivetage ou par collage selon un procédé décrit dans le document WO-A-98/44272 (US-A-6 102 184) conforme au préambule de la revendication 1.

Lorsque les garnitures de friction sont collées, la qualité de dépose de la colle est très importante. En effet, en cours d'utilisation, les disques de friction sont soumis à des contraintes très importantes. La quantité, ainsi que la répartition, de la colle à l'interface entre les pales radiales du voile et les garnitures de friction sont des paramètres essentiels, qui influent sur la résistance ainsi que sur la conformité du disque de friction.

Les procédés et les dispositifs connus de collage des garnitures de friction sur le voile de support consistent à déposer, à l'aide d'une buse, un cordon de colle sur une face de fixation des pales du voile. Cependant, de tels procédés ne permettent pas de contrôler de façon suffisamment précise la quantité de colle déposée. Il est fréquent qu'il y ait des bavures, ce qui peut provoquer des dysfonctionnements importants, notamment lorsque les pales sont de type "tripode" et que la bavure est déposée sur une face de portée d'une partie périphérique de la pale.

De plus, les procédés et les dispositifs connus ne permettent pas de détecter de façon fiable les voiles comportant un défaut d'encollage ou susceptibles de présenter un tel défaut.

### Objet de l'invention

De façon à remédier à ces inconvénients l'invention propose un procédé de fixation par collage de garnitures de friction sur au moins l'une des faces latérales de fixation d'une pale radiale s'étendant sur la périphérie extérieure d'un voile annulaire de support, du type qui comporte une étape d'encollage qui consiste à déposer une quantité prédéterminée de colle sur une zone de collage positionnée sur ladite face de fixation de la pale radiale, caractérisé en ce que l'étape de dépose de colle est réalisée au moyen d'un tampon qui comporte une zone d'encollage dont la forme correspond à la zone de collage de la face latérale de fixation de la pale.

Grâce à l'invention, la face de fixation n'a pas besoin d'être surélevée comme décrit dans le document EP-0 797 017. Le collage est fiable et économique.

Selon d'autres caractéristiques de l'invention :
- l'étape d'encollage comporte une première phase d'imprégnation par de la colle de la zone d'encollage du tampon, et une seconde phase d'encollage qui consiste à mettre en contact, sous pression axiale, la zone d'encollage imprégnée du tampon et la zone de collage de la face de la pale, de façon à transférer la quantité prédéterminée de colle du tampon sur la pale ;
- lors de la seconde phase, une tête de contre-pression vient en appui contre l'autre face latérale de la pale, qui est opposée à ladite face latérale de fixation, et qui applique sur l'autre face latérale de la pale, un effort axial opposé à celui exercé par le tampon sur ladite face latérale de fixation de façon à éviter des déformations de la pale ;
- les deux faces latérales de la pale sont encollées concomitamment par deux tampons dont les zones d'encollage sont situées en vis-à-vis des zones de collage de chacune des faces latérales de fixation ;
- l'étape d'encollage est suivie d'un mouvement de rotation du voile de façon à placer la zone de collage de la face de fixation d'une autre pale radiale, en vis-à-vis de la zone d'encollage du tampon ;
- le procédé comporte une étape de contrôle de l'encollage d'au moins une face latérale de fixation ;
- un système optique permet de détecter la présence de colle à l'extérieur de la zone de collage de la face de fixation ;
- un système optique permet de détecter l'absence de colle sur au moins une partie de la zone de collage de la face de fixation ;
- lorsque le système optique détecte la présence de colle à l'extérieur de la zone de collage et/ou l'absence de colle sur une partie de la zone de collage, le voile encollé est mis au rebut ;
- un système optique détermine la position réelle de la zone de collage encollée sur la face de fixation de la pale, il compare cette position réelle avec une position théorique de la zone de collage, et lorsque ces deux positions sont différentes, le voile au moins partiellement encollé est mis au rebut.

L'invention propose aussi un dispositif de fixation par collage de garnitures de friction sur au moins l'une des faces latérales de fixation d'une pale radiale s'étendant sur la périphérie extérieure d'un voile annulaire de support, du type qui comporte des moyens de dépose d'une quantité prédéterminée de colle sur une zone de collage positionnée sur la face de fixation de la pale radiale, caractérisé en ce que les moyens de dépose de colle comportent au moins un tampon dont une zone d'encollage prélève de la colle dans un réservoir ou dans une trace et dépose la quantité prédéterminée de colle sur la zone de collage de la face de fixation de la pale.

Selon d'autres caractéristiques du dispositif selon l'invention :
- le tampon dépose la quantité prédéterminée de colle sur la zone de collage par un contact sous pression axiale de la zone d'encollage avec la zone de collage de la face de fixation ;
- le dispositif comporte une tête de contre-pression qui vient en appui contre la face latérale de la pale qui est opposée à la face latérale de fixation, et qui applique sur ladite face latérale de la pale un effort axial opposé à celui exercé par le tampon sur la face latérale de fixation, de façon à éviter des déformations de la pale ;
- le dispositif comporte des moyens d'entraînement en rotation du voile de façon à placer successivement les faces latérales de fixation de différentes pales en vis-à-vis du tampon, pour les encoller ;
- les moyens d'entraînement comprennent des moyens d'indexation pour positionner la zone de collage en vis-à-vis de la zone d'encollage du tampon ;
- le dispositif comporte des moyens de contrôle de la zone de collage encollée ;
- les moyens de contrôle comprennent un dispositif de vision optique qui contrôle notamment la position de la zone de collage et/ou la répartition de la colle sur la face latérale de fixation ;
- les moyens de contrôle comprennent un dispositif de pesée qui contrôle la quantité de colle déposée sur au moins une zone de collage d'une face latérale de fixation d'une pale ;
- le dispositif comporte deux tampons qui sont chacun situés en vis-à-vis d'une zone de collage des faces latérales de fixation d'une pale ;
- le dispositif comporte une réserve de colle qui alimente au moins un réservoir de colle de façon à maintenir le niveau de remplissage de ce dernier à un niveau supérieur à un niveau de limite inférieure ;
- le dispositif comporte un dispositif de nettoyage de la zone d'encollage d'au moins un tampon.

### Description sommaire des dessins

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un disque de friction sur les pales du voile duquel sont représentées des zones de collage ;
- la figure 2 est une vue schématique d'un dispositif de fixation par collage selon l'invention, en position de pesée ;
- la figure 3 est une vue similaire à celle représentée à la figure précédente, le dispositif de fixation étant en position d'encollage ;
- la figure 4 représente en perspective un tampon d'encollage du dispositif de fixation ;
- la figure 5 est une vue schématique en perspective des éléments du dispositif de fixation qui permettent la dépose d'une quantité prédéterminée de colle sur les faces de fixation du voile.

### Description de modes de réalisation préférentiels de l'invention

Dans la suite de la description, une orientation axiale et transversale sera utilisée, à titre non limitatif, conformément à l'orientation de l'axe de rotation X-X du disque de friction et à un plan transversal qui lui est perpendiculaire. De plus, on utilisera une orientation interne, externe par rapport au plan transversal médian du disque de friction.

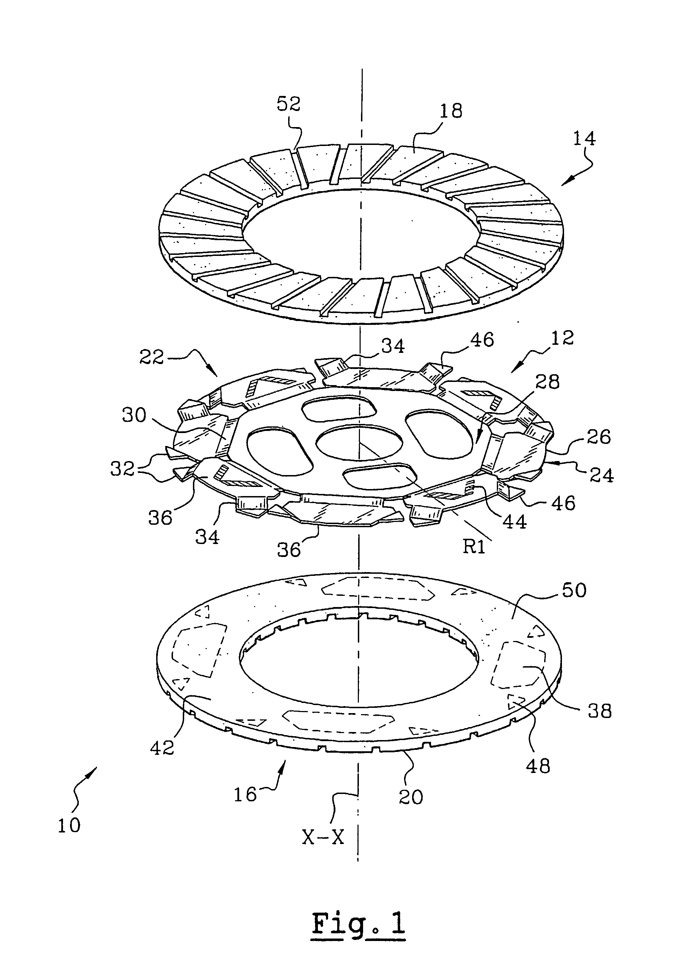

La figure 1 représente une vue en perspective éclatée d'un disque de friction 10 destiné notamment à la réalisation d'un dispositif de friction d'un embrayage à sec de véhicule automobile.

Un tel disque est décrit par exemple dans les documents EP-A-0 579 554 et EP-A-0 781 937. Pour plus de précisions, on se reportera à ces documents.

Ainsi le disque de friction 10 est principalement constitué d'un voile 12 sur la périphérie annulaire extérieure duquel sont rapportées des garnitures de frottement ou de friction 14 et 16.

Le voile 12 est une pièce en tôle mince découpée et pliée.

Les garnitures de frottement 14 et 16 peuvent être constituées par un anneau continu, ou par des blocs ou des pavés délimités par des bords qui sont par exemple d'orientation globalement radiale.

Les garnitures 14 et 16 sont réalisées en matériau de friction tel qu'un matériau composite, ou un matériau céramique. Elles ont une épaisseur sensiblement constante.

Ainsi, lors d'une phase d'embrayage, des plateaux de pression et de réaction (non représentés), qui sont solidaires du volant moteur, viennent serrer axialement progressivement les faces de frottement 18 et 20 des garnitures de frottement 14 et 16 respectivement, de façon à entraîner en rotation l'arbre primaire de la boîte de vitesses, par l'intermédiaire du disque de friction.

Le voile de support 12 en forme de rondelle annulaire comporte une portion périphérique extérieure 22 qui est ici fractionnée en des pales radiales 24.

Chaque pale radiale 24 est constituée d'une partie centrale de fixation 26, ici de grande étendue, raccordée à une portion centrale 28 du voile 12 par un pli tangentiel 30 qui forme le pied de la pale 24 et qui permet un décalage axial de la partie centrale de fixation 26 par rapport au plan général de la portion centrale 28 du voile 12.

Le plan médian de la portion centrale 28 définit un plan transversal médian du disque de friction 10.

Le voile 12 comporte ici huit pales radiales 24 qui sont réparties angulairement de manière régulière autour de l'axe X-X.

Les pales radiales 24 sont alternativement décalées axialement par rapport à la portion centrale 28 de façon que les parties centrales de fixation 26 définissent un plan supérieur et un plan inférieur, par rapport au plan transversal médian de la portion centrale 28 du voile 12. Le pli 30 s'étend perpendiculairement à l'axe de symétrie radiale de la pale 24.

Selon une conception connue, par exemple par le document EP-0 579 554 (US-A-5452783), chaque pale 24 est du type dit "tripode". Ainsi, chaque pale radiale 24 présente, en plus de la partie centrale de fixation 26, deux parties périphériques de portée 32.

Chaque pale tripode 24 présente une symétrie générale de conception par rapport à un axe radial médian R1.

Ainsi, les deux parties périphériques de portée 32 sont agencées tangentiellement de part et d'autre de la partie centrale de fixation 26 qui présente elle-même une symétrie de conception rapport à l'axe de symétrie radiale R1.

Les deux parties périphériques de portée 32 sont planes. Elles sont situées dans un plan décalé axialement. Ici, elles sont situées dans le plan supérieur lorsque la partie centrale de fixation 26 est située dans le plan inférieur et inversement.

Les parties périphériques de portée 32 d'une pale 24 sont raccordées à la partie centrale de fixation 26 par un pli 34.

Ainsi, les plans supérieur et inférieur comportent la partie centrale de fixation 26 d'une pale radiale 24 et les deux paires de parties périphériques de portée 32 des deux pales radiales 24 adjacentes.

Lors de l'assemblage du disque de friction 24, une face latérale de fixation 36 de chaque partie centrale de fixation 26 vient en contact sur une zone de fixation 38, délimitée par des traits pointillés sur la figure 1, d'une face de fixation interne 40 et 42 des garnitures de frottement 14 et 16 respectivement.

La fixation des parties centrales 26 et des garnitures de frottement 14 et 16 est réalisée par collage.

Ainsi, de la colle est déposée sur des zones de collage 44 des faces latérales de fixation 36 en vis-à-vis des zones de fixation 38.

Des faces latérales de portée 46 des parties périphériques de portée 32 d'une partie centrale de fixation 26 viennent en appui sur des zones de portée 48, délimitées par des traits pointillés sur la figure 1, de la garniture 16, 14 opposée à celle sur laquelle la partie centrale 26 correspondante est fixée.

Ici, les faces latérales de portée 46 sont simplement en appui sur les zones de portée 48 en vis-à-vis, de façon à permettre le glissement des parties périphériques de portée 32 par rapport à la garniture 14, 16 correspondante lors de la phase d'embrayage, ce qui provoque le rapprochement axial des garnitures 16, 14, et par conséquent la déformation du voile 12.

Les portions des surfaces de fixation interne 40 et 42 des garnitures de frottement 14 et 16 qui ne sont ni des zones de fixation 38, ni des zones de portée 48 sont appelées zones libres 50.

De façon à optimiser le refroidissement des garnitures de frottement 14 et 16, les faces de frottement 18 et 20 comportent des rainures 52 d'orientation globalement radiale et légèrement inclinée par rapport à une direction radiale.

De façon à assurer un fonctionnement optimal et une durée de vie maximale du disque de friction 10, il est nécessaire que la dépose de la colle sur la zone de collage 44 soit réalisée avec précision, c'est-à-dire que la quantité de colle déposée doit être prédéterminée, que la colle doit être déposée de façon homogène sur les zones de collage 44 qui doivent être positionnées précisément sur les faces latérales de fixation 36.

Ainsi, aucune trace de colle ne doit être déposée sur une autre partie, telle que par exemple une partie périphérique 32 du voile 12.

En effet, un manque de colle sur une zone de collage 44 fragilise l'assemblage et diminue la durée de vie du disque de friction 10.

Au contraire, une trace de colle située à l'extérieure d'une zone de collage 44 peut provoquer le collage d'une autre partie du voile 12 avec une face interne 40 ou 42 d'une garniture de friction 14 ou 16, notamment une partie périphérique 32, ce qui peut provoquer des dysfonctionnements du disque de friction 10. En effet, tel que décrit précédemment, les faces latérales des parties périphériques de portée 32 sont en appui sur les zones de portée 48 en vis-à-vis, de façon à permettre le glissement des parties périphériques de portée 32 par rapport à la garniture 14, 16 correspondante.

Ainsi le collage de ces zones de portée 48 provoque un manque de progressivité de l'embrayage, lors d'une phase d'embrayage.

L'invention propose un procédé et un dispositif de fixation par collage des garnitures de friction 14 et 16 sur le voile 12 qui permet, d'une part, de remédier à ces inconvénients et, d'autre part, de contrôler la conformité de la dépose de la colle, de façon à mettre au rebut immédiatement les voiles de support 12 comportant un défaut d'encollage.

De tels défauts sont difficiles à déceler lorsque les garnitures sont collées ainsi les coûts dus au rebut de disques de friction 10 jugés non conformes à cause d'un défaut d'encollage du voile 12 sont ici fortement limités.

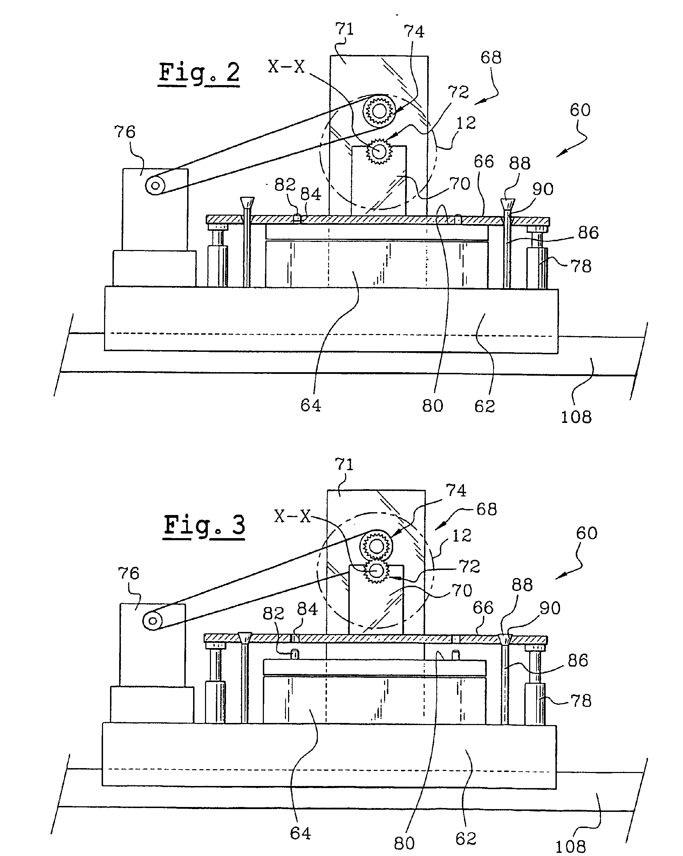

Les figures 2 et 3 représentent un dispositif 60 de fixation par collage des garnitures de friction 14 et 16 sur le voile 12.

Le dispositif 60 permet de déposer une quantité de colle sur une zone de collage 44 et de contrôler que cette quantité correspond à la quantité prédéterminée permettant un collage optimal des garnitures de friction 14 et 16.

Pour ce faire, le dispositif 60 de fixation par collage comporte principalement un bâti 62 équipé d'une balance 64 sur laquelle peut être posée une plaque mobile 66 de support du voile annulaire 12.

Des moyens d'entraînement 68 du voile 12 en rotation autour de son axe sont agencés sur le dispositif de fixation 60. Les moyens d'entraînement 68 sont ici constitués de deux pignons 72 et 74.

Le premier pignon 72 est fixé sur un bras 70 qui s'étend, de la plaque mobile 66 verticalement vers le haut, de plus il porte le voile 12. Le second pignon 74 est porté par une potence 71 et il est entraîné en rotation par un organe d'entraînement 76.

La plaque 66 de support est mobile en translation verticale, elle est entraînée par des vérins 78.

L'étape d'encollage est précédée par une étape de pesée de la plaque 66, sur le premier pignon 72 de laquelle est monté le voile 12. Pour ce faire, les vérins 78 sont en position basse de façon que la plaque 66 repose sur la balance 64. Dans cette position dite de pesée et représentée à la figure 2, les dents des pignons 72 et 74 ne sont pas engrenées.

La balance 64 permet ainsi de peser la plaque 66 et le voile 12 sans que la mesure ne soit affectée par le frottement de la plaque 66 avec un organe extérieur, tel que le second pignon 74.

De plus, la face supérieure 80 de la balance 64 est munie de pions 82 de positionnement qui coopèrent avec des trous 84 de centrage réalisés dans la plaque 66 de façon que la plaque 66 ne frotte pas sur des moyens 86 de guidage en translation verticale la traversant. Un tel agencement permet d'améliorer la précision de la pesée.

L'étape de pesée permet de réaliser la tare de la plaque 66 qui supporte le voile 12 qui n'est pas encollé. La valeur mesurée est stockée dans la mémoire d'un système de pilotage, non représenté, du dispositif de fixation par collage 60.

L'étape d'encollage consiste dans un premier temps à manoeuvrer les vérins 78 de façon qu'ils soulèvent la plaque 66. Elle est guidée en translation par les moyens de guidage 86 qui permettent aussi son blocage en hauteur.

En effet, l'extrémité supérieure des moyens de guidage 86 comportent un cône convexe 88 renversé qui coopère avec un évidement conique concave 90 complémentaire, réalisé dans la plaque 66.

La position haute de la plaque 66, représentée à la figure 3, est appelée position d'encollage.

Dans cette position, les dents du pignon 72 engrènent avec celles du pignon 74, de façon que la rotation de ce dernier provoque la rotation du pignon 72 ainsi de celle du voile de support 12.

L'organe d'entraînement 76 peut être un moteur électrique pas à pas qui permet d'indexer précisément la position du voile 12.

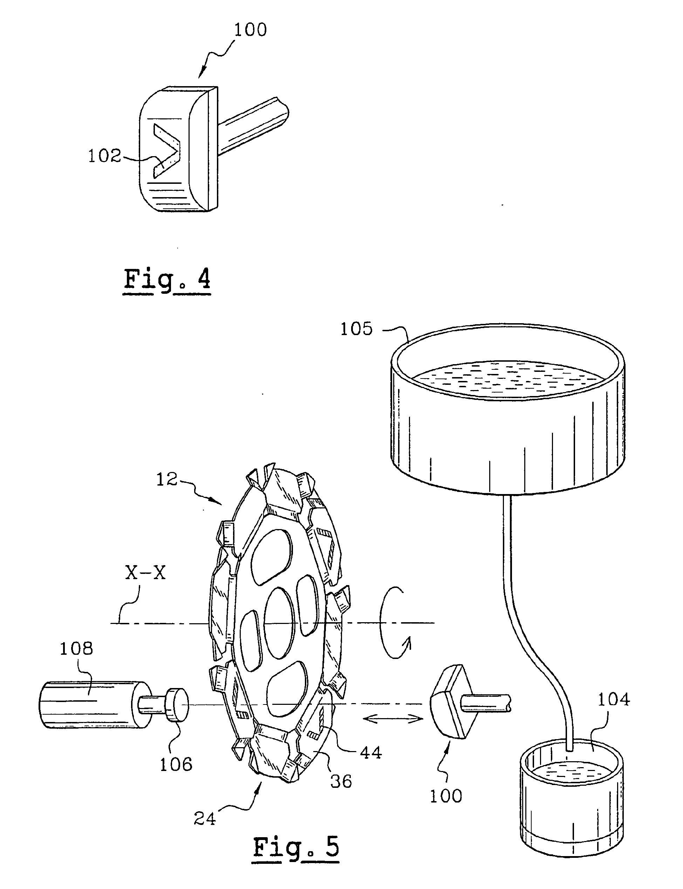

Conformément à l'invention, l'étape de dépose de la colle est réalisée au moyen d'un tampon 100, représenté à grande échelle à la figure 4, qui comporte une zone d'encollage 102 dont la forme et les dimensions correspondent à la zone de collage 44 des faces latérales de fixation 36 des pales radiales 24.

L'étape d'encollage se décompose en une première phase d'imprégnation par de la colle de la zone d'encollage 102 du tampon 100 et, une seconde phase d'encollage qui consiste à mettre la zone d'encollage 102 imprégnée du tampon 100 en contact et sous pression axiale avec la zone de collage 44 de la face latérale de fixation 36 de la pale 24, de façon à transférer la quantité prédéterminée de colle du tampon 100 sur la face latérale de la pale 24.

Le tampon 100 peut par exemple être constitué d'un matériau comportant du silicone.

La première phase d'imprégnation consiste à tremper la partie du tampon sur laquelle est réalisée la zone d'encollage 102 dans un réservoir de colle 104. La zone d'encollage 102 est alors recouverte d'une quantité de colle qui est supérieure ou égale à la quantité prédéterminée de colle à déposer sur la zone de collage 44.

Le dispositif de fixation 60 comporte un mécanisme, non représenté, qui permet le mouvement de la zone d'encollage 102 du tampon 100 entre le réservoir de colle 104 et la zone de collage 44.

De façon que la zone d'encollage 102 soit correctement recouverte de colle, le niveau du réservoir 104 doit toujours être supérieur à un niveau limite inférieur.

De façon à limiter le nombre d'interventions de remplissage du réservoir 104, le dispositif de fixation 60 comporte une réserve de colle 105 qui alimente le réservoir 104 de façon à maintenir son niveau de remplissage à un niveau supérieur un niveau limite inférieur.

La réserve de colle 105 présente une capacité de stockage supérieure à celle du réservoir 104 qui nécessite ainsi des remplissages moins fréquents. De plus elle est reliée au réservoir 105 par une canalisation qui peut être flexible, ce qui lui permet d'être agencée sur le dispositif de fixation 60 de façon à être facilement accessible.

Selon une variante, non représentée, la première phase d'imprégnation peut consister à remplir de colle une trace ou empreinte réalisée sur une première zone d'une plaque appelée cliché. La forme de la trace correspond à celle de la zone d'encollage du tampon.

Pour ce faire, la paroi inférieure du réservoir présente une ouverture, c'est une seconde zone du cliché qui en constitue le fond.

Le remplissage de la trace consiste à faire coulisser transversalement le cliché par rapport au réservoir de façon que la première zone glisse sous l'ouverture de la paroi inférieure du réservoir, on dit que le réservoir est "raclant". La colle remplie alors la trace.

Un mouvement transversal inverse permet de dégager du réservoir la trace remplie de colle.

La zone d'encollage du tampon vient alors en contact avec la trace de la première zone de la plaque, de façon à y transférer une quantité de colle qui est supérieure ou égale à la quantité prédéterminée de colle à déposer sur la zone de collage 44.

Le tampon 100 peut aussi comporter des moyens d'alimentation de la zone d'encollage 102, non représentés. Il peut ainsi être constitué en un matériau poreux qui permet le transfert de la colle entre un réservoir intégré et la zone d'encollage 102.

Concomitamment à la seconde phase d'encollage, une tête de contre-pression 106, qui est mobile en translation, par exemple entraînée par un vérin 108, vient en appui contre la face latérale de la pale radiale 24 qui est opposée à la face latérale de fixation 36. La tête de contre-pression 106 permet d'appliquer sur la face latérale opposée un effort axial qui est opposé à celui exercé par le tampon 100 sur la face latérale de fixation 24 à encoller.

La figure 5 ne représente qu'un seul tampon 100 et une tête de contre-pression 106. Cependant, deux éléments semblables sont agencés de façon symétrique par rapport au plan de la portion centrale 28 du voile 12, de façon à encoller les zones de collage 44 situées sur les faces de fixation 36 qui ont une orientation opposée.

Selon une variante, lorsque les pales radiales 24 sont situées dans le même plan que la portion centrale 28 du voile 12, et qu'elles comportent une zone de collage sur chacune de leurs faces latérales, elles peuvent être encollées simultanément par deux tampons. Ainsi, la tête de contre-pression est supprimée, les deux tampons appliquant chacun, sur la pale radiale 24, un effort axial opposé.

Lorsqu'une pale 24 a été encollée, l'organe d'entraînement provoque la rotation d'un pas des moyens d'entraînement 68 et par conséquent la rotation du voile annulaire de support 12 de façon que la zone de collage 44 d'une autre pale radiale 24 soit positionnée en vis-à-vis de la zone d'encollage 102 du tampon 100. L'étape d'encollage est alors répétée.

Le procédé se poursuit jusqu'à ce que toutes les zones de collage 44 des pales radiales 24 soient encollées.

La plaque 66 est alors posée à nouveau sur la balance 64 en position de pesée de façon à déterminer le poids de la plaque 66 et du voile 12 encollé. La valeur du poids mesurée lors du tarage est soustraite de cette valeur de façon à déterminer de façon précise la quantité de colle déposée sur le voile 12, lors de l'étape d'encollage.

La valeur de la quantité de colle déposée est alors comparée avec une valeur de colle prédéterminée permettant le collage optimal des garnitures 14 et 16 sur le voile 12.

Si la valeur absolue de la différence entre ces deux valeurs est supérieure à une valeur de seuil, l'encollage du voile 12 est non conforme, c'est-à-dire qu'il présente un manque ou un excès de colle, et le voile 12 est mis au rebut.

La différence des valeurs de quantité de colle déposée peut aussi être comparée à une valeur de seuil supérieure et à une valeur de seuil inférieure dont les valeurs absolues sont différentes.

Cela permet ainsi d'éviter les étapes suivantes de collage des garnitures et l'utilisation de matériau, alors que le disque de friction 10 qui serait obtenu ne présenterait pas les caractéristiques souhaitées.

L'étape d'encollage provoque l'encrassement de la zone de collage 102 du tampon 100. Il est alors nécessaire de procéder à son nettoyage de façon à enlever les résidus de colle qui y adhèrent. Pour ce faire, il est avantageux d'utiliser un élément adhésif sur lequel la zone de collage 102 est mise en contact, lorsque le tampon est écarté de l'élément adhésif, les résidus de colle restant accrochés sur cet élément.

Avantageusement, l'élément adhésif est un ruban déroulant. Ainsi, à chaque fois qu'il permet le nettoyage de la zone de collage 102 il se décale d'un pas de façon à présenter une surface adhésive vierge, lors du nettoyage suivant du tampon.

La colle utilisée lors de l'étape de collage est généralement visqueuse et a tendance à imprégner les éléments mobiles du dispositif de nettoyage du tampon 102, notamment les éléments d'entraînement. Ainsi, il est avantageux de les traiter par un revêtement présentant des propriétésanti-adhérentes. Le revêtement peut être du téflon.

Selon une variante, le procédé de fixation comporte une étape de contrôle de la qualité de la dépose de la colle. Cette étape permet de vérifier la position de la zone de collage 44, ainsi que la répartition de la colle sur cette zone.

Dans ce but, le dispositif de fixation 60 peut comporter un système optique (non représenté). Les différences de comportement optique entre la colle et l'acier permettent au système optique de différencier aisément les zones qui sont recouvertes de colle et les zones qui ne le sont pas.

Ainsi, le système optique permet de déterminer précisément le positionnement d'une zone de collage 44 par un traitement du signal qu'il fournit, tel qu'un comptage de pixels d'une image.

La position de la zone de collage 44 réelle déterminée est comparée à sa position théorique. De façon similaire à la quantité de colle déposée, le voile 12 encollé est mis au rebut lorsque la différence entre la position réelle et la position théorique est trop importante.

Le système optique permet aussi de détecter d'éventuels manques de colle sur la zone de collage 44 et des traces de colle sur les zones du voile 12 différentes de la zone de collage 44. Dans ce cas, l'encollage n'est pas conforme et le voile 12 est mis au rebut.

L'étape de contrôle d'une zone de collage 44 d'une pale radiale 24 peut être effectuée en temps masqué lors de la dépose de colle sur une autre pale 24.

De manière générale, les surfaces de fixation 36 des pales radiales 24 subissent des traitements tel qu'un corindonnage ou un trempage dans un bain acide destiné à favoriser l'accrochage de la colle.

Avant la dépose de la colle sur une surface de fixation 36, le système optique peut aussi contrôler son état de surface de façon à détecter une zone défectueuse qui ne permettrait pas un accrochage suffisant de la colle. Lorsqu'une telle zone est détectée, le voile 12 est mis au rebut.

Après l'étape de contrôle, le voile 12 encollé est envoyé vers le poste suivant qui permet notamment le collage des garnitures de friction 14 et 16.

Avantageusement, le dispositif de collage 60 est monté coulissant en translation sur un rail de guidage 108.

## Revendications

1. Procédé de fixation par collage de garnitures de friction (14, 16) sur au moins l'une des faces latérales (36) de fixation d'une pale radiale (24) s'étendant sur la périphérie extérieure d'un voile (12) annulaire de support, du type qui comporte une étape d'encollage qui consiste à déposer une quantité prédéterminée de colle sur une zone de collage (44) positionnée sur ladite face latérale de fixation (36) de la pale radiale (24), **caractérisé en ce que** l'étape de dépose de colle est réalisée au moyen d'un tampon (100) qui comporte une zone d'encollage (102) dont la forme correspond à la zone de collage (44) de la face latérale (36) de fixation de la pale radiale (24).

2. Procédé de fixation selon la revendication précédente, **caractérisé en ce que** l'étape d'encollage comporte une première phase d'imprégnation par de la colle de la zone d'encollage (102) du tampon (100), et une seconde phase d'encollage qui consiste à mettre en contact, sous pression axiale, la zone d'encollage (102) imprégnée du tampon (100) et la zone de collage (44) de la face latérale (36) de la pale radiale (24), de façon à transférer la quantité prédéterminée de colle du tampon (100) sur la pale radiale (24).

3. Procédé de fixation selon la revendication précédente, **caractérisé en ce que,** lors de la seconde phase, une tête de côntre-pression (106) vient en appui contre l'autre face latérale de la pale radiale (24), qui est opposée à ladite face latérale (36) de fixation, et qui applique sur l'autre face latérale de la pale radiale (24), un effort axial opposé à celui exercé par le tampon (100) sur ladite face latérale (36) de fixation de façon à éviter des déformations de la pale radiale (24).

4. Procédé de fixation selon l'une des revendications 1 ou 2, **caractérisé en ce que** les deux faces latérales de la pale radiale (24) sont encollées concomitamment par deux tampons (100) dont les zones d'encollage (102) sont situées en vis-à-vis des zones de collage (44) de chacune des faces latérales (36) de fixation.

5. Procédé de fixation selon l'une quelconque des revendications précédentes, **caractérisé en ce que** l'étape d'encollage est suivie d'un mouvement de rotation du voile (12) de façon à placer la zone de collage (44) de la face de fixation (36) d'une autre pale radiale (24), en vis-à-vis de la zone d'encollage (102) du tampon (100).

6. Procédé de fixation selon l'une quelconque des revendications précédentes, **caractérisé en ce qu'**il comporte une étape de contrôle de l'encollage d'au moins une face latérale (36) de fixation.

7. Procédé de fixation selon la revendication précédente, **caractérisé en ce qu'**un système optique permet de détecter la présence de colle à l'extérieur de la zone de collage (44) de la face latérale (36) de fixation.

8. Procédé de fixation selon la revendication 6 ou 7, **caractérisé en ce qu'**un système optique permet de détecter l'absence de colle sur au moins une partie de la zone de collage (44) de la face latérale (36) de fixation.

9. Procédé de fixation selon l'une quelconque des revendications 6 à 8, **caractérisé en ce que,** lorsque le système optique détecte la présence de colle à l'extérieur de la zone de collage (44) et/ou l'absence de colle sur une partie de la zone de collage (44), le voile (12) annulaire de support encollé est mis au rebut.

10. Procédé de fixation selon l'une quelconque des revendications 6 à 9, **caractérisé en ce qu'**un système optique détermine la position réelle de la zone de collage (44) encollée sur la face (36) de fixation de la pale radiale (24), **en ce qu'**il compare cette position réelle avec une position théorique de la zone de collage (44), et **en ce que** lorsque ces deux positions sont différentes, le voile (12) annulaire de support au moins partiellement encollé est mis au rebut.

11. Dispositif de fixation (60) par collage de garnitures de friction (14, 16) sur au moins l'une des faces latérales de fixation d'une pale radiale (24) s'étendant sur la périphérie extérieure d'un voile (12) annulaire de support, du type qui comporte des moyens de dépose d'une quantité prédéterminée de colle sur une zone de collage (44) positionnée sur la face latérale (36) de fixation de la pale radiale (24), **caractérisé en ce que** les moyens de dépose de colle comportent au moins un tampon (100) dont une zone d'encollage (102) prélève de la colle dans un réservoir (104) ou dans une trace et dépose la quantité prédéterminée de colle sur la zone de collage (44) de la face (36) de fixation de la pale radiale (24).

12. Dispositif de fixation (60) selon la revendication précédente, **caractérisé en ce que** le tampon (100) dépose la quantité prédéterminée de colle sur la zone de collage (44) par un contact sous pression axiale de la zone d'encollage (102) avec la zone de collage (44) de la face (36) de fixation.

13. Dispositif de fixation (60) selon la revendication précédente, **caractérisé en ce qu'**il comporte une tête de contre-pression (106) qui vient en appui contre la face latérale de la pale radiale (24) qui est opposée à la face latérale (36) de fixation, et qui applique sur ladite face latérale de la pale (24) un effort axial opposé à celui exercé par le tampon (100) sur la face latérale (36) de fixation, de façon à éviter des déformations de la pale radiale (24).

14. Dispositif de fixation (60) selon l'une quelconque des revendications 11 à 13, **caractérisé en ce qu'**il comporte des moyens d'entraînement (68) en rotation du voile (12) annulaire de support de façon à placer successivement les faces latérales (36) de fixation de différentes pales (24) en vis-à-vis de la zone d'encollage (102) du tampon (100), pour les encoller.

15. Dispositif de fixation (60) selon la revendication précédente, **caractérisé en ce que** les moyens d'entraînement (68) comprennent des moyens d'indexation pour positionner la zone de collage (44) en vis-à-vis de la zone d'encollage (102) du tampon (100).

16. Dispositif de fixation (60) selon l'une quelconque des revendications 11 à 15, **caractérisé en ce qu'**il comporte des moyens de contrôle de la zone de collage (44) encollée.

17. Dispositif de fixation (60) selon la revendication précédente, **caractérisé en ce que** les moyens de contrôle comprennent un dispositif de vision optique qui contrôle notamment la position de la zone de collage (44) et/ou la répartition de la colle sur la face latérale (36) de fixation.

18. Dispositif de fixation (60) selon l'une des revendications 16 ou 17, **caractérisé en ce que** les moyens de contrôle comprennent un dispositif de pesée (64) qui contrôle la quantité de colle déposée sur au moins une zone de collage (44) d'une face latérale (36) de fixation d'une pale radiale (24).

19. Dispositif de fixation (60) selon l'une quelconque des revendications 11 à 18, **caractérisé en ce qu'**il comporte deux tampons (100) qui sont chacun situés en vis-à-vis d'une zone de collage (44) des faces latérales (36) de fixation d'une pale radiale (24).

20. Dispositif de fixation (60) selon l'une quelconque des revendications 11 à 19, **caractérisé en ce qu'**il comporte une réserve (105) de colle qui alimente au moins un réservoir (104) de colle de façon à maintenir le niveau de remplissage de ce dernier à un niveau supérieur à un niveau de limite inférieure.

21. Dispositif de fixation (60) selon l'une quelconque des revendications 11 à 19, **caractérisé en ce qu'**il comporte un dispositif de nettoyage de la zone d'encollage (102) d'au moins un tampon (100).

## Claims

1. Method for securing by gluing of friction linings (14. 16) onto at least one of the lateral securing surfaces (36) of a radial blade (24) which extends on the outer periphery of an annular support body (12), of the type which comprises a gluing step which consists of depositing a predetermined quantity of glue onto a gluing area (44) positioned on the said lateral securing surface (36) of the radial blade (24), **characterised in that** the step of depositing of glue is carried out by means of a pad (100) which comprises a gluing area (102), the form of which corresponds to the gluing area (44) of the lateral securing surface (36) of the radial blade (24).

2. Securing method according to the preceding claim, **characterised in that** the gluing step comprises a first stage of impregnation with glue of the gluing area (102) of the pad (100), and a second gluing stage which consists of putting into contact, under axial pressure, the impregnated gluing area (102) of the pad (100) and the gluing area (44) of the lateral surface (36) of the radial blade (24), so as to transfer the predetermined quantity of glue from the pad (100) onto the radial blade (24).

3. Securing method according to the preceding claim, **characterised in that,** during the second stage, a counter-pressure head (106) is supported against the other lateral surface of the radial blade (24), which is opposite the said lateral securing surface (36), and which applies to the other lateral surface of the radial blade (24) an axial force which opposes that exerted by the pad (100) on the said lateral securing surface (36), so as to avoid deformations of the radial blade (24).

4. Securing method according to one of claims 1 or 2, **characterised in that** the two lateral surfaces of the radial blade (24) are glued simultaneously by two pads (100), the gluing areas (102) of which are situated opposite gluing areas (44) of each of the lateral securing surfaces (36).

5. Securing method according to one of the preceding claims, **characterised in that** the gluing step is followed by a movement of rotation of the body (12), so as to place the gluing area (44) of the securing surface (36) of another radial blade (24) opposite the gluing area (102) of the pad (100).

6. Securing method according to one of the preceding claims, **characterised in that** it comprises a step of checking the gluing of at least one lateral securing surface (36).

7. Securing method according to the preceding claim, **characterised in that** an optical system makes it possible to detect the presence of glue on the exterior of the gluing area (44) of the lateral securing surface (36).

8. Securing method according to claim 6 or 7, **characterised in that** an optical system makes it possible to detect the lack of glue on at least part of the gluing area (44) of the lateral securing surface (36).

9. Securing method according to any one of claims 6 to 8, **characterised in that,** when the optical system detects the presence of glue on the exterior of the gluing area (44) and/or the absence of glue on part of the gluing area (44), the glued annular support body (12) is discarded.

10. Securing method according to any one of claims 6 to 9, **characterised in that** an optical system determines the real position of the gluing area (44) which is glued onto the securing surface (36) of the radial blade (24), **in that** it compares this real position with a theoretical position of the gluing area (44), and **in that**, when these two positions are different, the at least partially glued annular support body (12) is discarded.

11. Device (60) for securing by gluing of friction linings (14, 16) onto at least one of the lateral securing surfaces of a radial blade (24) which extends on the outer periphery of an annular support body (12), of the type which comprises means for depositing a predetermined quantity of glue onto a gluing area (44) positioned on the lateral securing surface (36) of the radial blade (24), **characterised in that** the means for depositing of glue comprise at least one pad (100), a gluing area (102) of which collects glue from a reservoir (104) or from a trail, and deposits the predetermined quantity of glue on the gluing area (44) of the securing surface (36) of the radial blade (24).

12. Securing device (60) according to the preceding claim, **characterised in that** the pad (100) deposits the predetermined quantity of glue onto the gluing area (44) by contact, under axial pressure, of the gluing area (102) with the gluing area (44) of the securing surface (36).

13. Securing device (60) according to the preceding claim, **characterised in that** it comprises a counter-pressure head (106) which is supported against the lateral surface of the radial blade (24) which is opposite the lateral securing surface (36), and which applies to the said lateral surface of the blade (24) an axial force which opposes that exerted by the pad (100) on the lateral securing surface (36), so as to avoid deformations of the radial blade (24).

14. Securing device (60) according to any one of claims 11 to 13, **characterised in that** it comprises means (68) for rotation of the annular support body (12), so as to place the lateral securing surfaces (36) of different blades (24) in succession opposite the gluing area (102) of the pad (100), in order to glue them.

15. Securing device (60) according to the preceding claim, **characterised in that** the drive means (68) comprise indexing means in order to position the gluing area (44) opposite the gluing area (102) of the pad (100).

16. Securing device (60) according to any one of claims 11 to 15, **characterised in that** it comprises means for checking the glued gluing area (44).

17. Securing device (60) according to the preceding claim, **characterised in that** the checking means comprise an optical viewing device which checks in particular the position of the gluing area (44) and/or the distribution of the glue on the lateral securing surface (36).

18. Securing device (60) according to one of claims 16 or 17, **characterised in that** the checking means comprise a weighing device (64) which checks the quantity of glue deposited on at least one gluing area (44) of a lateral securing surface (36) of a radial blade (24).

19. Securing device (60) according to any one of claims 11 to 18, **characterised in that** it comprises two pads (100) which are each situated opposite a gluing area (44) of the lateral securing surfaces (36) of a radial blade (24).

20. Securing device (60) according to any one of claims 11 to 19, **characterised in that** it comprises a reservoir (105) of glue which supplies at least one reservoir (104) of glue, so as to maintain the filling level of the latter at a level greater than a lower limit level.

21. Securing device (60) according to any one of claims 11 to 19, **characterised in that** it comprises a device for cleaning the gluing area (102) of at least one pad (100).

## Patentansprüche

1. Befestigungsverfahren zur Klebebefestigung von Reibbelägen (14, 16) auf wenigstens einer der Befestigungsseitenflächen (36) eines radialen Segments (24), das sich am äußeren Umfang einer ringförmigen Trägerscheibe (12) erstreckt, mit einem Verfahrensschritt zur Klebstoffauftragung, der darin besteht, dass eine vorbestimmte Menge Klebstoff auf einem Klebebereich (44) aufgebracht wird, der auf der besagten Befestigungsseitenfläche (36) des radialen Segments (24) positioniert ist, **dadurch gekennzeichnet, dass** der Verfahrensschritt zur Aufbringung des Klebstoffs mittels eines Stempels (100) erfolgt, der einen Klebstoff-Auftragebereich (102) umfasst, dessen Form dem Klebebereich (44) der Befestigungsseitenfläche (36) des radialen Segments (24) entspricht.

2. Befestigungsverfahren nach dem vorangehenden Anspruch, **dadurch gekennzeichnet, dass** der Verfahrensschritt zur Klebstoffauftragung eine erste Phase zur Imprägnierung des Klebebereichs (102) des Stempels (100) mit dem Klebstoff und eine zweite Phase zur Klebstoffauftragung umfasst, die darin besteht, den imprägnierten Klebstoff-Auftragebereich (102) des Stempels (100) und den Klebebereich (44) der Seitenfläche (36) des radialen Segments (24) unter axialem Druck in Kontakt zu bringen, um die vorbestimmte Klebstoffmenge vom Stempel (100) auf das radiale Segment (24) zu übertragen.

3. Befestigungsverfahren nach dem vorangehenden Anspruch, **dadurch gekennzeichnet, dass** während der zweiten Phase ein Gegendruckkopf (106) an der anderen Seitenfläche des radialen Segments (24) zur Anlage kommt, die der besagten Befestigungsseitenfläche (26) gegenüberliegt, und auf die andere Seitenfläche des radialen Segments (24) eine axiale Beanspruchung ausübt, die zu derjenigen entgegengesetzt ist, die durch den Stempel (100) auf die besagte Befestigungsseitenfläche (36) ausgeübt wird, um Verformungen des radialen Segments (24) zu verhindern.

4. Befestigungsverfahren nach einem der Ansprüche 1 oder 2, **dadurch gekennzeichnet, dass** auf die beiden Seitenflächen des radialen Segments (24) gleichzeitig Klebstoff durch zwei Stempel (100) aufgetragen wird, deren Klebstoff-Auftragebereiche (102) sich gegenüber den Klebebereichen (44) jeder der Befestigungsseitenflächen (36) befinden.

5. Befestigungsverfahren nach einem der vorangehenden Ansprüche, **dadurch gekennzeichnet, dass** auf den Verfahrensschritt zur Klebstoffauftragung eine Drehbewegung der Trägerscheibe (12) folgt, um den Klebebereich (44) der Befestigungsfläche (36) eines anderen radialen Segments (24) gegenüber dem Klebstoff-Auftragebereich (102) des Stempels (100) anzuordnen.

6. Befestigungsverfahren nach einem der vorangehenden Ansprüche, **dadurch gekennzeichnet, dass** es einen Verfahrensschritt zur Kontrolle der Klebstoffauftragung auf wenigstens einer Befestigungsseitenfläche (36) umfasst.

7. Befestigungsverfahren nach dem vorangehenden Anspruch, **dadurch gekennzeichnet, dass** es durch ein optisches System ermöglicht wird, das Vorhandensein von Klebstoff außerhalb des Klebebereichs (44) der Befestigungsseitenfläche (36) zu erfassen.

8. Befestigungsverfahren nach Anspruch 6 oder 7, **dadurch gekennzeichnet, dass** es durch ein optisches System ermöglicht wird, das Nichtvorhandensein von Klebstoff wenigstens auf einem Teil des Klebebereichs (44) der Befestigungsseitenfläche (36) zu erfassen.

9. Befestigungsverfahren nach einem der Ansprüche 6 bis 8, **dadurch gekennzeichnet, dass,** wenn das optische System das Vorhandensein von Klebstoff außerhalb des Klebebereichs (44) und/oder das Nichtvorhandensein von Klebstoff auf einem Teil des Klebebereichs (44) erfasst, die mit einem Klebstoffauftrag versehene ringförmige Trägerscheibe (12) ausgesondert wird.

10. Befestigungsverfahren nach einem der Ansprüche 6 bis 9, **dadurch gekennzeichnet, dass** ein optisches System die Ist-Position des mit einem Klebstoffauftrag versehenen Klebebereichs (44) auf der Befestigungsfläche (36) des radialen Segments (24) bestimmt, dass es diese Ist-Position mit einer Soll-Position des Klebebereichs (44) vergleicht und dass, wenn diese beiden Positionen voneinander abweichen, die wenigstens teilweise mit einem Klebstoffauftrag versehene ringförmige Trägerscheibe (12) ausgesondert wird.

11. Befestigungsvorrichtung (60) zur Klebebefestigung von Reibbelägen (14, 16) auf wenigstens einer der Befestigungsseitenflächen eines radialen Segments (24), das sich am äußeren Umfang einer ringförmigen Trägerscheibe (12) erstreckt, in der Ausführung mit Mitteln zur Aufbringung einer vorbestimmten Klebstoffmenge auf einem Klebebereich (44), der auf der Befestigungsseitenfläche (36) des radialen Segments (24) positioniert ist, **dadurch gekennzeichnet, dass** die Mittel zur Klebstoffaufbringung wenigstens einen Stempel (100) umfassen, von dem ein Klebstoff-Auftragebereich (102) Klebstoff aus einem Behälter (104) oder aus einer Aufnahme entnimmt und die vorbestimmte Klebstoffmenge auf dem Klebebereich (44) der Befestigungsfläche (36) des radialen Segments (24) aufbringt.

12. Befestigungsvorrichtung (60) nach dem vorangehenden Anspruch, **dadurch gekennzeichnet, dass** der Stempel (100) die vorbestimmte Klebstoffmenge auf dem Klebebereich (44) durch einen unter axialem Druck erfolgenden Kontakt des Klebstoff-Auftragebereichs (102) mit dem Klebebereich (44) der Befestigungsfläche (36) aufbringt.

13. Befestigungsvorrichtung (60) nach dem vorangehenden Anspruch, **dadurch gekennzeichnet, dass** sie einen Gegendruckkopf (106) umfasst, der an der Seitenfläche des radialen Segments (24) zur Anlage kommt, die der Befestigungsseitenfläche (26) gegenüberliegt, und der auf die besagte Seitenfläche des radialen Segments (24) eine axiale Beanspruchung ausübt, die zu derjenigen entgegengesetzt ist, die durch den Stempel (100) auf die besagte Befestigungsseitenfläche (36) ausgeübt wird, um Verformungen des radialen Segments (24) zu verhindern.

14. Befestigungsvorrichtung (60) nach einem der Ansprüche 11 bis 13, **dadurch gekennzeichnet, dass** sie Antriebsmittel (68) für den Drehantrieb der ringförmigen Trägerscheibe (12) umfasst, um die Befestigungsseitenflächen (36) verschiedener radialer Segmente (24) nacheinander gegenüber dem Klebstoff-Auftragebereich (102) des Stempels (100) anzuordnen, um sie mit einem Klebstoffauftrag zu versehen.

15. Befestigungsvorrichtung (60) nach dem vorangehenden Anspruch, **dadurch gekennzeichnet, dass** die Antriebsmittel (68) Indexiermittel umfassen, um den Klebebereich (44) gegenüber dem Klebstoff-Auftragebereich (102) des Stempels (100) anzuordnen.

16. Befestigungsvorrichtung (60) nach einem der Ansprüche 11 bis 15, **dadurch gekennzeichnet, dass** sie Kontrollmittel zur Kontrolle des mit einem Klebstoffauftrag versehenen Klebebereichs (44) umfasst.

17. Befestigungsvorrichtung (60) nach dem vorangehenden Anspruch, **dadurch gekennzeichnet, dass** die Kontrollmittel eine optische Sichtvorrichtung umfassen, die insbesondere die Position des Klebebereichs (44) und/oder die Verteilung des Klebstoffs auf der Befestigungsseitenfläche (36) kontrolliert.

18. Befestigungsvorrichtung (60) nach einem der Ansprüche 16 oder 17, **dadurch gekennzeichnet, dass** die Kontrollmittel eine Wiegevorrichtung (64) umfassen, die die wenigstens auf einem Klebebereich (44) einer Befestigungsseitenfläche (36) eines radialen Segments (24) aufgebrachte Klebstoffmenge kontrolliert.

19. Befestigungsvorrichtung (60) nach einem der Ansprüche 11 bis 18, **dadurch gekennzeichnet, dass** sie zwei Stempel (100) umfasst, die jeweils gegenüber einem Klebebereich (44) der Befestigungsseitenflächen (36) eines radialen Segments (24) angeordnet sind.

20. Befestigungsvorrichtung (60) nach einem der Ansprüche 11 bis 19, **dadurch gekennzeichnet, dass** sie einen Klebstoffvorrat (105) umfasst, der wenigstens einen Klebstoffbehälter (104) speist, um den Füllstand dieses Behälters auf einer Höhe zu halten, die über einem unteren Grenzfüllstand liegt.

21. Befestigungsvorrichtung (60) nach einem der Ansprüche 11 bis 19, **dadurch gekennzeichnet, dass** sie eine Reinigungsvorrichtung zur Reinigung des Klebstoff-Auftragebereichs (102) wenigstens eines Stempels (100) umfasst.
